# FASCICULE DE BREVET EUROPEEN

(11) **EP 2 047 164 B1**
(45) Date de publication et mention de la délivrance du brevet: **14.09.2011**
(21) Numéro de dépôt: 07823662.7
(22) Date de dépôt: 30.07.2007
(51) Int. Cl.: F16L 9/14, F16L 9/18, C04B 28/00

(54) **CONDUIT D'AERONEF**
FLUGZEUGLEITUNGSROHR
AIRCRAFT CONDUIT

(30) Priorité: 04.08.2006 FR 0653290
(43) Date de publication de la demande: 15.04.2009
(73) Titulaire: Airbus Operations, 31060 Toulouse (FR)
(72) Inventeur: PORTE, Alain, 31770 Colomiers (FR); JAZET, Marie, 31770 COLOMIERS (FR)
(74) Mandataire: Fantin, Laurent
(86) Numéro de dépôt international: PCT/FR2007/051747
(87) Numéro de publication internationale: WO 2008/015361

(56) Documents cités:
- EP-A- 1 666 784
- WO-A-03/087008
- WO-A-2004/106705
- US-A1- 5 798 307
- DAVIDOVITS: "30 Years of Successes and Failures in Geopolymer Applications. Market Trends and Potential Breakthroughs" GEOPOLYMER CONFERENCE, 29 octobre 2002 (2002-10-29), pages 1-16, XP002291216

## Description

La présente invention se rapporte à un conduit d'aéronef, ledit conduit étant plus particulièrement adapté pour être disposé dans une zone susceptible d'être soumise à des températures élevées, telle que par exemple la motorisation de l'aéronef.

La motorisation d'un aéronef comprend de nombreux conduits pour acheminer différents fluides, l'ensemble desdits conduits étant appelé par la suite tuyauterie. Un conduit intégré dans une tuyauterie d'aéronef est décrit dans EP-A-1 666 784. Le conduit est en acier, entouré d'un revêtement.

Compte tenu de l'importance de la part du carburant dans les coûts d'exploitation d'un aéronef, les constructeurs tendent à diminuer la masse des aéronefs afin de réduire leur consommation, notamment en utilisant des matériaux composites pour réaliser des parties de la tuyauterie.

Ces matériaux composites sont composés de fibres, notamment en carbone, graphite, basalte, aramide ou verre par exemple, noyées dans une matrice en résine organique telle que par exemple une résine époxy, thermoplastique ou thermodurcissable. Les fibres peuvent se présenter sous la forme de tissus ou de nappes non tissées, selon les cas.

Pour pouvoir être utilisées ultérieurement, ces fibres sont généralement enrobées. En effet, lors de leur élaboration, l'état de surface de ces fibres est dégradé ce qui nuit à l'adhésion des résines organiques. En outre, la manipulation des fibres à l'état brut, lors d'une opération de tissage par exemple, est délicate car des fibrilles se détachent du faisceau principal. Aussi, les fibres sèches sont traitées pour restaurer l'état de surface puis enrobées d'une résine organique favorisant l'adhésion chimique pour une imprégnation ultérieure. Cet enrobage est appelé ensimage. Les fibres commercialisées ensimées, sont lisses et prêtes à l'emploi.

Des techniques industrielles ont été développées pour la mise en oeuvre des fibres ensimées et des résines époxy. Ces techniques sont maîtrisées et permettent d'obtenir des coûts de fabrication des pièces compatibles avec ceux des pièces métalliques équivalentes.

Par ailleurs, les pièces en matériau composite offrent des caractéristiques mécaniques au moins égales à celles des pièces métalliques et sont nettement plus légères que ces dernières.

Cependant, l'utilisation des matériaux composites pour réaliser des parties de la tuyauterie peut s'avérer problématique dans certains cas, notamment lorsque lesdites parties sont placées dans des zones susceptibles d'être soumises à des températures élevées, par exemple supérieure à 500°C. C'est notamment le cas de la tuyauterie prévue dans l'environnement du moteur. Or, à de telles températures, les conduits réalisés en matériau composite à base de résine organique perdent leurs caractéristiques mécaniques et deviennent poreux, ce qui se traduit par un manque de fiabilité desdits conduits.

L'architecture du moteur tient généralement compte de ce manque de fiabilité à haute température des conduits en matériau composite en incorporant des chicanes coupe-feu par exemple, pour limiter la propagation de la chaleur en direction des conduits. Néanmoins, cette solution n'est pas satisfaisante car elle complexifie le moteur et le gain de masse découlant de l'emploi de conduit en matériau composite est quasiment annulé par la présence de chicanes supplémentaires.

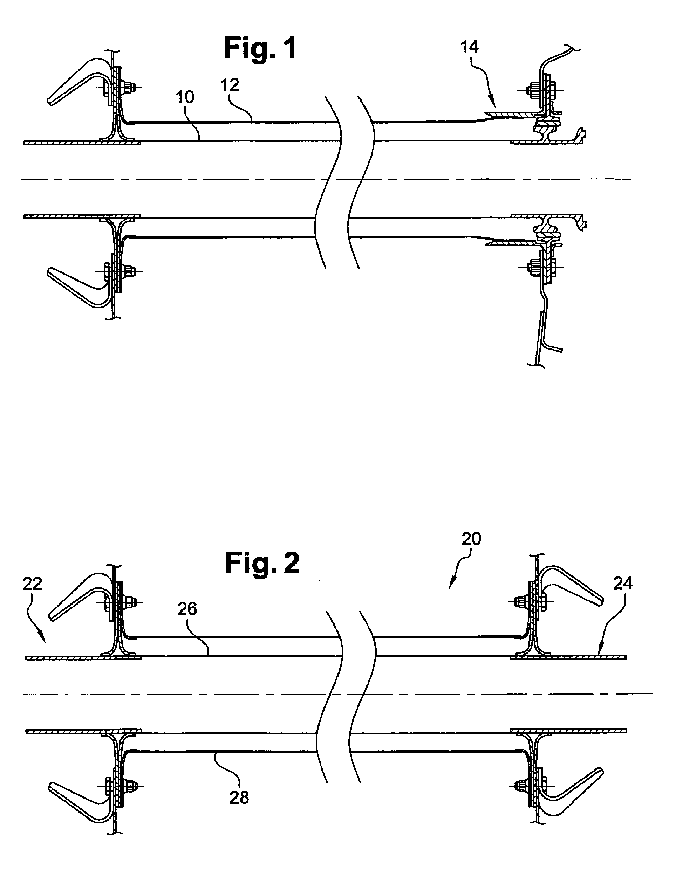

Pour des raisons de sécurité, les conduits sont doublés à savoir un conduit principal 10 appelé également conduit interne est placé à l'intérieur d'un second conduit 12 appelé conduit externe, comme illustré sur la figure 1. Ainsi même en cas de fuite du conduit interne, le fluide circulant dans le second conduit continue d'alimenter l'organe auquel il est destiné.

Lorsque des matériaux composites sont utilisés pour réaliser le conduit interne 10, ce dernier est placé dans un conduit externe 12 en titane pour le protéger, notamment des températures élevées.

Cependant, cette solution n'est pas satisfaisante pour les raisons suivantes : L'utilisation du titane pour le conduit externe engendre un surpoids et un surcoût pour la tuyauterie.

Par ailleurs, l'association de matériaux différents pour les conduits interne et externe ayant nécessairement des caractéristiques mécaniques et structurelles différentes engendrent de nombreux problèmes lors de la conception. Ainsi, il est nécessaire de prévoir des systèmes 14 de reprise des déplacements relatifs (translation et rotation) entre les conduits et des systèmes de raccordement ou de fixation complexes pour tenir compte des différences de dilatation entre les deux conduits. Tous ces éléments complexifient la tuyauterie, conduisent à rendre la maintenance plus compliquée et plus longue et à alourdir l'ensemble. Aussi, la présente invention vise à pallier aux inconvénients de l'art antérieur en proposant un conduit pour un aéronef susceptible de conserver sa fiabilité à des températures élevées.

A cet effet, l'invention a pour objet un conduit intégré dans une tuyauterie d'aéronef caractérisé en ce qu'il est réalisé à partir d'un matériau composite comportant une matrice en résine géopolymérique renforcée par des fibres.

D'autres caractéristiques et avantages ressortiront de la description qui va suivre de l'invention, description donnée à titre d'exemple uniquement, en regard des dessins annexés sur lesquels :
- la figure 1 est une coupe longitudinale d'une partie de tuyauterie selon l'art antérieur comportant un conduit interne en matériau composite à base de résine organique et un conduit externe en titane, et
- la figure 2 est une coupe longitudinale d'une partie de tuyauterie selon l'invention comportant un conduit interne et un conduit externe en matériau composite à base de résine géopolymérique.

Sur la figure 2, on a représenté en 20 une partie d'une tuyauterie installée sur un aéronef. La présente invention est décrite appliquée à une tuyauterie d'une motorisation d'un aéronef car ce type de tuyauterie est la plus fortement sollicitée, notamment en température. Ainsi, en cas de feu, la tuyauterie peut être soumise à une température supérieure à 500°C.

Toutefois, l'invention n'est pas limitée à cette application, et pourrait s'appliquer à d'autres tuyauteries d'un aéronef.

Cette partie de tuyauterie 20 assure le transfert d'un fluide entre une première extrémité 22 et une seconde extrémité 24. Chaque extrémité 22, 24 comprend des moyens pour être connectée à un autre élément, par exemple une autre partie de la tuyauterie, un dispositif à alimenter en fluide ou susceptible de fournir un fluide.

Cette partie de tuyauterie comprend au moins un conduit 26 assurant le transfert du fluide.

Selon l'invention, le conduit 26 est réalisé en matériau composite comportant une résine géopolymérique renforcée par des fibres.

Pour obtenir un matériau susceptible de conserver sa résistance mécanique à haute température, on utilise une résine géopolymérique de type sialate (×SiO₂,AlO₂), dans lequel x est compris entre ou égale à 1,75 et 50. Avantageusement, on utilise la résine commercialisée sous la dénomination MEYEB par la société Cordi-géopolymère.

Par résine géopolymérique, on entend une résine géopolymérique ou un mélange de résines géopolymériques.

Selon les applications, les fibres peuvent avoir différentes sections et être réalisées à partir de différents matériaux, tels que par exemple en carbone, graphite, basalte, aramide ou verre.

Les fibres peuvent être sous la forme d'un tissé, d'un non tissé ou d'une nappe.

A l'état naturel, le carbone se présente sous la forme de fils comportant des barbes qui confèrent au matériau un caractère très abrasif. Pour permettre une mise en forme ultérieure, ces fibres sont généralement enrobées. En effet, lors de leur élaboration, l'état de surface de ces fibres est dégradé ce qui nuit à l'adhésion des résines organiques. En outre, la manipulation des fibres à l'état brut, lors d'une opération de tissage par exemple, est délicate car des fibrilles se détachent du faisceau principal. Aussi, les fibres sèches sont traitées pour restaurer l'état de surface puis enrobées d'une résine organique favorisant l'adhésion chimique pour une imprégnation ultérieure. Cet enrobage est appelé ensimage. Les fibres commercialisées ensimées, sont lisses et prêtes à l'emploi. La quantité d'ensimage est relativement faible par rapport à la fibre et ne représente que de l'ordre de 1% en masse de la fibre ensimée. Par ailleurs, la nature de la résine organique utilisée pour l'ensimage peut varier d'un fabricant à l'autre.

Pour favoriser l'adhérence de la matrice en résine géopolymérique avec les fibres, il est nécessaire de retirer au moins partiellement l'ensimage, les résines organiques et les résines géopolymériques n'étant pas miscibles.

Le retrait de l'ensimage par un traitement thermique ou chimique permet l'utilisation de tissus largement commercialisés.

Selon un mode de réalisation, le retrait de l'ensimage est réalisé grâce à un traitement thermique consistant à chauffer les fibres jusqu'à la température de dégradation thermique de la résine afin que cette dernière n'adhère plus aux fibres. Avantageusement, le traitement thermique s'effectue sous atmosphère inerte.

Ce traitement permet de traiter la majorité des fibres commercialisées, moyennant un éventuel ajustement de la température et/ou du cycle de température à laquelle sont soumises les fibres ensimées. Il permet un traitement relativement rapide de l'ordre de quelques minutes.

Les températures de dégradation thermique des résines utilisées pour l'ensimage étant très proches de la température d'oxydation des fibres de carbone, il convient de déterminer la température et/ou le cycle de température à laquelle les fibres sont soumises. En effet, une dégradation trop importante des fibres conduirait à réduire fortement les caractéristiques du produit obtenu. Généralement, la fin de la période de retrait de l'ensimage correspond au début de la période de dégradation des fibres.

Un bon compromis pour obtenir une adhérence satisfaisante et une dégradation limitée des fibres consiste à retirer entre 50% et 90% de l'ensimage.

Pour déterminer la température de chauffe, on réalise un essai sur un échantillon. Grâce à une analyse par thermogravimétrie (ATG) associée ou non à une spectrographie de masse, il est possible d'identifier le composé utilisé pour l'ensimage et de déterminer les températures de début et de fin de retrait ainsi que la masse soustraite.

Le traitement thermique consiste alors à chauffer le produit sous atmosphère inerte en prenant soin de maintenir la température moyenne du four dans la fourchette déterminée lors de l'analyse par thermogravimétrie. Un contrôle final de perte de masse permet de valider le processus.

Selon un autre mode opératoire, le retrait de l'ensimage peut être réalisé grâce à un traitement chimique, notamment en utilisant un solvant.

Au préalable, il est nécessaire d'identifier le composé utilisé pour l'ensimage afin de choisir le solvant. Cette identification peut être menée par une analyse par thermogravimétrie. La méthode chimique est relativement simple à mettre en oeuvre et nécessite au moins un bain de solvant comme le chlorure de méthylène par exemple. La durée du traitement est déterminée en fonction notamment du composé utilisé pour l'ensimage.

Pour réduire la durée du traitement, un bon compromis pour obtenir une adhérence satisfaisante et une durée de traitement limitée consiste à retirer entre 50% et 90% de l'ensimage.

Selon une autre caractéristique de l'invention, pour améliorer l'imprégnation des fibres, on réalise un apport d'eau dans la résine, de l'ordre de 3 à 7% en volume pour améliorer la fluidité de ladite résine et obtenir une homogénéisation de la migration de ladite résine dans les fibres. Cet ajout d'eau vient en supplément par rapport à la quantité d'eau préconisé par le fabricant de résine.

Le conduit 26 réalisé à partir d'un matériau composite à base d'une résine géopolymérique résiste aux températures élevées et conserve ses caractéristiques structurelles et mécaniques ainsi que sa porosité. Contrairement aux conduits antérieurs dont la porosité augmente à hautes températures, le conduit selon l'invention conserve une porosité lui permettant d'être étanche.

Selon les variantes, le conduit 26 peut avoir une section circulaire ou non et comprendre des portions rectiligne et/ou courbe.

Selon un mode de réalisation, la partie de la tuyauterie comprend deux conduits, un premier conduit 26 dit conduit interne disposé dans un second conduit 28 dit conduit externe, les deux conduits étant réalisés en matériau composite à base d'une résine géopolymérique et étant de préférence sensiblement coaxiaux. Cette configuration permet d'obtenir une tuyauterie plus fiable dans la mesure où si le conduit interne fuit, le fluide est transféré toujours par le second conduit 28.

Le fait de prévoir deux conduits en un même matériau, permet de simplifier la tuyauterie dans la mesure où il n'est plus nécessaire de prévoir de dispositifs permettant de compenser les mouvements relatifs susceptibles d'apparaître lorsque les conduits sont réalisés dans des matériaux ayant des coefficients de dilatation différents. Par ailleurs, le fait de réaliser les deux conduits à partir de fibres de carbone noyées dans une matrice de résine géopolymérique permet de limiter les variations dimensionnelles des éléments, le carbone ne se dilatant pas, si bien que les moyens de connexion prévus aux extrémités sont simplifiés.

## Revendications

1. Conduit intégré dans une tuyauterie d'aéronef **caractérisé en ce qu'**il est réalisé à partir d'un matériau composite comportant une matrice en résine géopolymérique renforcée par des fibres.

2. Conduit intégré dans une tuyauterie d'aéronef selon la revendication 1, **caractérisé en ce qu'**il est réalisé à partir d'un matériau composite à base de fibres noyées dans une résine géopolymérique de type sialate (xSiO₂,AlO₂), dans lequel x est compris entre ou égale à 1,75 et 50.

3. Conduit intégré dans une tuyauterie d'aéronef selon la revendication 2, **caractérisé en ce que** les fibres ont été au moins partiellement désensimées préalablement à l'imprégnation avec la résine géopolymérique.

4. Tuyauterie d'aéronef comportant au moins un conduit selon l'une quelconque des revendications précédentes.

5. Tuyauterie d'aéronef selon la revendication 4, **caractérisé en ce qu'**il comprend deux conduits réalisés à partir d'un matériau composite comportant une matrice en résine géopolymérique renforcée par des fibres, un premier conduit (26) dit interne dans lequel est susceptible de s'écouler un fluide, ledit conduit interne (26) étant placé à l'intérieur d'un second conduit (28) dit externe.

## Claims

1. Pipe that is integrated into an aircraft piping wherein it is produced from a composite material comprising a fiber-reinforced geopolymer resin matrix.

2. Pipe that is integrated into an aircraft piping according to claim 1, wherein it is produced from a composite material being based on fibers that are woven into a sialate-type geopolymer resin (xSiO₂, AlO₂), in which x is between or equal to 1.75 to 50.

3. Pipe that is integrated into an aircraft piping according to claim 2, wherein the finish has been at least partially removed prior to the impregnation with the geopolymer resin.

4. Aircraft piping that comprises at least one pipe according to claim 3.

5. Aircraft piping according to claim 5, wherein it comprises two pipes produced from a composite material comprising a fiber-reinforced geopolymer resin matrix, a first pipe so-called internal pipe (26) into which a fluid can flow, whereby said internal pipe (26) is placed inside a second so-called external pipe (28).

## Patentansprüche

1. Leitung, die in ein Rohrleitungssystem eines Flugzeugs integriert ist, **dadurch gekennzeichnet, dass** sie aus einem Verbundwerkstoff mit einer Matrix aus faserverstärktem Geopolymerharz hergestellt ist.

2. Leitung, die in ein Rohrleitungssystem eines Flugzeugs integriert ist, nach Anspruch 1, **dadurch gekennzeichnet, dass** sie aus einem Verbundwerkstoff auf der Basis von Fasern, die in ein Geopolymerharz vom Typ Sialat (xSiO₂, AlO₂), wobei x zwischen oder gleich 1,75 und 50 liegt bzw. beträgt, eingebettet sind, hergestellt ist.

3. Leitung, die in ein Rohrleitungssystem eines Flugzeugs integriert ist, nach Anspruch 2, **dadurch gekennzeichnet, dass** die Fasern vor dem Imprägnieren mit dem Geopolymerharz wenigstens teilweise entschlichtet worden sind.

4. Rohrleitungssystem eines Flugzeugs, das wenigstens eine Leitung nach einem der vorstehenden Ansprüche umfasst.

5. Rohrleitungssystem eines Flugzeugs nach Anspruch 4, **dadurch gekennzeichnet, dass** es zwei Leitungen umfasst, die aus einem Verbundwerkstoff mit einer Matrix aus faserverstärktem Geopolymerharz hergestellt sind, eine erste sogenannte innere Leitung (26), in der ein Fluid strömen kann, wobei die innere Leitung (26) innerhalb einer zweiten sogenannten äußeren Leitung (28) angeordnet ist.
